Europäisches Patentamt

European Patent Office

Office européen des brevets

(19)

(11)     EP 1 099 316 B1

(12)     EUROPEAN PATENT SPECIFICATION

(45) Date of publication and mention
of the grant of the patent:
**23.04.2003   Bulletin 2003/17**

(21) Application number: **99941462.6**

(22) Date of filing: **16.07.1999**

(51) Int Cl.⁷: **H04B 7/08**, H04Q 7/38

(86) International application number:
**PCT/EP99/05326**

(87) International publication number:
**WO 00/005827 (03.02.2000 Gazette 2000/05)**

(54) **METHOD AND DEVICE FOR THE ANTENNA SELECTION IN A DIGITAL TELECOMMUNICATION SYSTEM**

VERFAHREN UND GERÄT ZUR ANTENNENAUSWAHL IN EINEM DIGITALEN TELEKOMMUNIKATIONSSYSTEM

PROCEDE ET DISPOSITIF DE SELECTION D'ANTENNE DANS UN SYSTEME DE TELECOMMUNICATION NUMERIQUE

(84) Designated Contracting States:
**DE FI FR IT SE**

(30) Priority: **21.07.1998  IT   MI981674**

(43) Date of publication of application:
**16.05.2001   Bulletin 2001/20**

(73) Proprietor: **Siemens Mobile Communications S.p.A.**
**20126 Milano (IT)**

(72) Inventors:
 • **DE BENEDITTIS, Rossella**
   **I-20020 Barbara di Lainate (IT)**
 • **GIANCARLO, Rosina**
   **I-20018 Sedriano (IT)**
 • **BETTI, Alessandro**
   **I-62100 Macerata (IT)**
 • **SALTINI, Giorgio**
   **I-20156 Milano (IT)**

(74) Representative: **Giustini, Delio**
**Siemens Information and Communication Networks S.p.A.**
**Palazzo Gorky**
**Via Monfalcone, 1**
**20092 Cinisello Balsamo (IT)**

(56) References cited:
**WO-A-96/08089          US-A- 5 459 873**

 • **SAFAVI S ET AL: "PREDETECTION QUALITY DIVERSITY SCHEME FOR DECT OUTDOOR APPLICATIONS" ELECTRONICS LETTERS, vol. 32, no. 11, 23 May 1996 (1996-05-23), pages 966-968, XP000599112 ISSN: 0013-5194**

**Description**

**Technical Field**

The present invention relates to digital telecommunication systems according to Time Division Multiple Access (TDMA), and in particular, but not exclusively, relates to systems operating according the DECT standard (Digital Enhanced Cordless Telecommunications).

More precisely, the present invention relates to a method and a device for the selection of an antenna used in the fixed radio station of such system.

In the following description reference will be made in particular to a DECT system, without that this should be limited thereto. The invention can be generally applied in systems where the connection between two transceiver units (a radiomobile or portable unit or PP (Portable Part according to the DECT terminology) and a fixed radio station or RFP (Radio Fixed Part) is realized. As already known, the DECT system includes a plurality of fixed radio stations distributed in a way to cover the interested areas and controlled by a centralised unit (CCFP, Central Control Fixed Part), and connected to a switching network which may be the public one of the private type (PABX), and of portable units linking up via radio with the fixed radio stations, and being able to communicate with each other and with others fixed users connected to the telephone network. The links may be of the voice type or they may enable the exchange of data occupying the equivalent of one or more voice "channels".

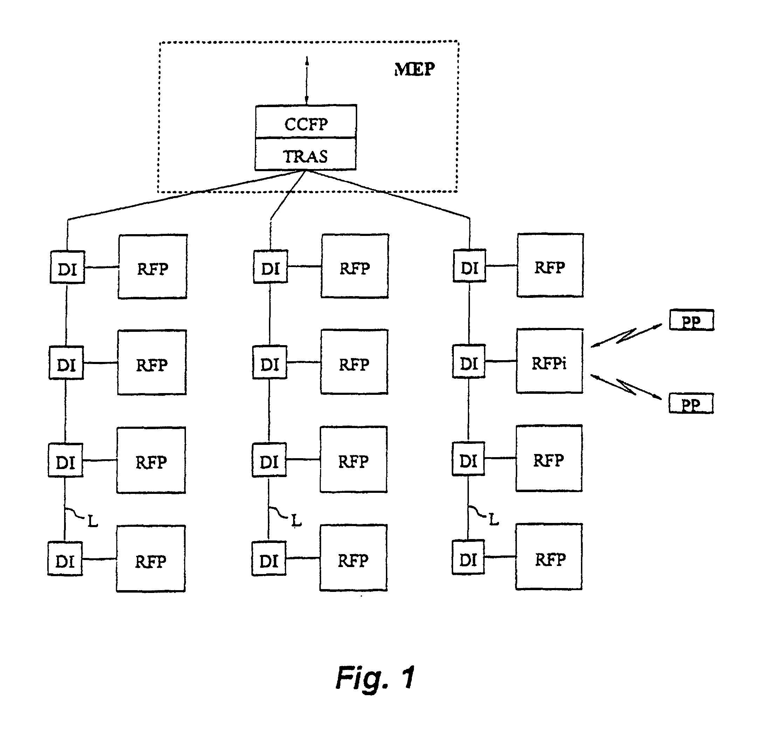

At first, an exemplary DECT network architecture is schematically illustrated in Fig. 1.

It comprises groupings of h (in the example of the figure h = 4) fixed radio stations RFP (Radio Fixed Part) preferably connected to coppers (in the example 3 coppers) set up by connection or dorsal lines L through drop/insert devices DI. Without departing from the scope of the present invention, it turns obviously out to be possible to connect in a star-shaped way each RFP to the CCFP eliminating the aforesaid connection lines, and therefore obviously also the Drop/Insert devices DI.

Each RFP can manage via radio a certain number of PPs, which generally are mobile.

The coppers end up at a TRAnScoder unit TRAS, and the latter is for example connected to the public network PSTN (Public Switching Telephone Network) through a Central Control Fixed Part (CCFP) associated to a switching network or a dedicaded switching module MEP.

Regarding the vocal signals, digital 64 Kbit/s channels typically set up the interface between the CCFP and the accessed network. To the CCFP unit a set of transcoders TRAS is associated providing for the conversion of the PCM codification (Pulse Code Modulation) on 8 bits used at the PSTN side into an ADPCM (Adaptive Differential Pulse Code Modulation) codification on four bits used at the DECT side. In this way two 32 Kbit/s channels can be mapped onto each 64 Kbit/s channel.

The 2,048 Mbit/s (bi-directional) connection link connecting the CCFP to the different RFPs supports therefore 48 voice channels plus a predetermined number of synchronisation and signalling channels.

The area covered by a fixed radio station or cell is generally rather reduced, arriving also to a radio coverage radius of tens or hundreds of metres. Typical applications of the personal telephony systems can be found in industrial plants where they may substitute the installation of a cabled network, in shopping centres or urban centres where they may advantageously substitute public telephone boxes and so on.

The telecommunication network for personal telephony is of the digital type. The radio access technology is of the type FDMA (Frequency Division Multiple Access) - TDMA (Time Division Multiple Access) - TDD (Time Division Duplex).

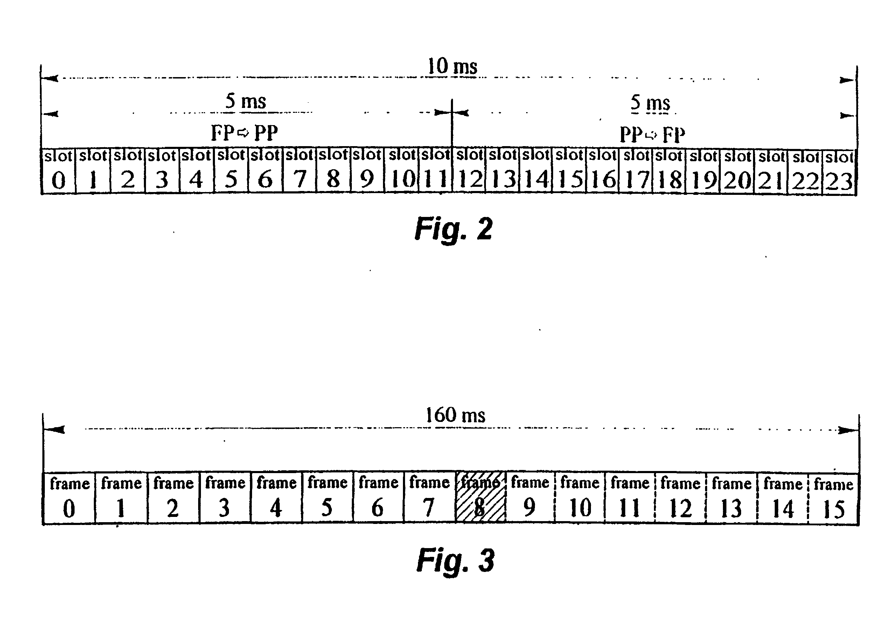

The system is of the TDD type as the transmission and reception direction are time divided. More precisely, as illustrated with reference to Fig. 2, the time frame interval of 10 milliseconds is divided into two halves: usually during the first 5 ms (i.e. in the first half frame) the fixed radio station transmits and the portables receive, and in the following 5 ms (i.e. in the second half frame) the contrary happens. Each half frame is set up by 12 time channels or time slots, hereafter for the sake of brevity also referred to as "slot", (from which it comes that DECT is a TDMA system, set up by 420 (or in some cases by 424) bits. The slots are transmitted or received using 10 (or more) different frequencies (from where it results that DECT is an FDMA system as well, which allows to provide to the system up to 120 (or more) radio channels (where a radio channel is identified by the pair (time slot + frequency).

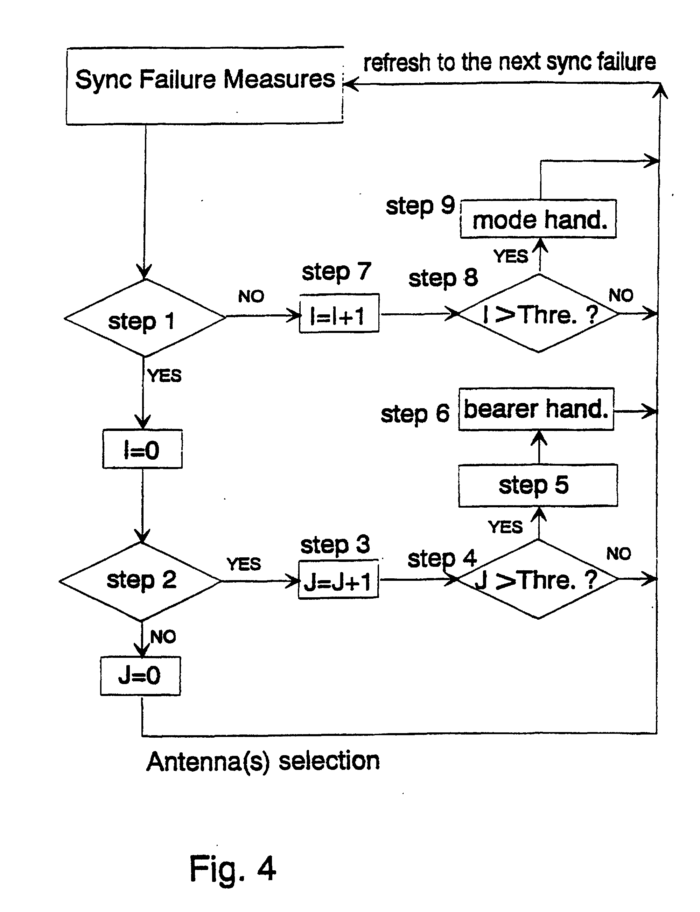

The DECT multiframe is illustrated in Fig.3 and has a duration of 160 ms, so that it includes 16 frames of 10 msec each as described in Fig. 2.

For further details on the DECT system please refer to the specifications established by the European Telecommunications Standards Institute, briefly ETSI (Ref. EN 300 175 specification).

In a DECT system the fixed radio station or RFP has an antenna system which may have different configurations:

• N antennas (with N equal to at least 2) for management in space diversity and/or polarisation of the received signal;
• a set of sectorial antennas, that is a system in which a plurality of antennas is connected to each RFP where every antenna of the set lightens just a portion (or sector) of the entire cell or of the RFP coverage area (usually trisection antennas are defined which implies therefore the use of antennas with a coverage angle of 120°);
• a set of phased antennas suitable to set up a radiation diagram with variable direction and gain.

Moreover the RFP includes a selection device or appliance among the antennas enabling the selection of the most suitable one that is that antenna which assures the better quality for the detected signal.

In fact the transmitted signal, especially in an urban environment, may be affected by the so-called fading phenomenon constituted by amplitude and phase variations of the electromagnetic field or of the power of the detected signal due to changeable propagation conditions. Because of such a phenomenon, in a predetermined instant the signal can be received with major intensity from a predetermined antenna (or from a predetermined first group of antennas) while in a following instant this signal can be received with major intensity from a second antenna (or from another predetermined second group of antennas).

Therefore mainly due to this phenomenon, it is necessary to choose time by time the antenna (or the antennas group) supplying the best signal.

**Background Art**

According to the known art the antenna selection appliance is able to manage an antenna switching according to two or more methods.

In particular the switching may occur based on a switching method, called "time switch diversity" or it can be based on a switching method called "instant diversity". The switching method "time switch diversity" is based on the concept for which, in case the reception of a signal from an antenna (or antenna group) has to be considered failed (according to a preset failure criterion), then in the next received frame a different antenna (or antenna group) is selected at the RFP (see also Fig. 2). The predetermined failure criterion may be of the proprietary type and could be based for example on the estimation of the received field strength or RSSI (Received Signal Strength Indicator) or, more generally on the estimation of the perceived signal quality.

This switching method "time switch diversity" presents the disadvantage that reaction cah be slow in respect to the aforesaid fading phenomenon that should be hindered.

The already known switching method (see the paper "Implementation of the Preamble Switched Antenna Diversity Option" prepared by Dag Akerberg and distributed by Ericsson to the participants of RES-3R/SEG on 1994-10-17) named "instant diversity" is instead realised by a fast sampler able to carry out an RSSI measurement in a short time period equal to 2-3 μs with the possibility to switch the antenna in a comparable amount of time. For example, always according to the present state of the art it is possible to sample a signal at the beginning of the slot carrying out a measurement on the antenna 1 for about 3 μs, to change the antenna in a very short time, equal to about 1 - 2 μs and

then sample the received signal on the other antenna.

The "instant diversity" switching method has the advantage compared to "Time switch diversity" method that makes it possible to understand during the first 10 μs which is the best antenna and which will be selected to detect the remaining part of the signal.

However it is necessary to note that the "instant diversity" method presents certain critical aspects from the implementation point of view, because such operations are carried out at the beginning of the slot, sacrificing a few of those bits (i.e. the preamble bits) useful for the timing reconstruction and which do not bring any user data. On the other hand it cannot be carried out during the slot, because the antenna switching introduces a discontinuity in the demodulation of the slot which would make lose part of its informative content.

There has also been the proposal to use an extended preamble consisting in the repetition, at the beginning of the slot, of the preamble field in order to dedicate the first part of this field to the selection of the antenna and the second part to the specific function for which such a preamble has been foreseen by ETSI standard (like f.i. the timing reconstruction and alignment between the two communicating radio transceivers. However it is necessary to point out that if such a solution to extend preamble field makes it possible to solve the above-mentioned problems, it also defines the turning up of a further drawback consisting in the shortening of the inter slot guard periods, which means major interference among DECT systems which are not synchronised each other (e.g. because they do not refer to the same operator) and the shortening of the propagation range.

A combination of "instant diversity" and preamble-based antenna selection technique is disclosed in the paper "Predetection quality diversity scheme for DECT outdoor applications S. Safavi and L.B. Lopes, ELECTRONICS LETTERS, vol.32, no. 11, 23 May 1996 (1996-05-23), pages 966-968.

This additional antenna selection technique has therefore the drawbacks above mentioned in connection with said instant diversity tecnique and in connection with said extended preamble tecnique.In the case of a system that foresees sectorial antennas it is also known to carry out the selection of antennas in such array. More precisely, at the moment when the connection on the antenna in use turns out to be degraded, a switching operation can be carried out on other antennas to see if the connection quality improved.

But such solution includes however the drawback that the choice requires to realise an RSSI measuring on a slot for each antenna of the array, and therefore it may last rather a lot of slots; too many bursts could be sacrificed because of having tried some antennas not suitable for this link. Moreover the measurements are heterogeneous with each other as they are carried out at different instants.

Furthermore it is necessary to point out that, as there is the possibility to carry out an RSSI measurement, methods have been proposed for the estimation of the speed of a mobile user which are based on the received field strength variation. Such finding is important for the handover between a DECT cell and another one of the GSM system when the mobile user moves quickly in relatively small cells.

## Object of the invention

The object of the present invention is to overcome the above-mentioned problems and limitations, and in particular to propose a better method and a device for the selection of the most suitable antenna. Advantageously the method according to the invention allows also obtaining an estimation of the speed of the mobile user.

## Summary of the invention

The present invention achieves these objects by means of a method with the features listed in claim 1 and by means of a device having the features listed in claim 10.

Additional features which are belived to be novel are set forth with particularity in the appended claims.

According to the method of the invention, a series of measurements is carried out during the reception of the useful signal which does not overcome the adopted criterion to define the correlation of the slots and which will be declared as lost (so-called "SYNC FAILURE").

Now it will be illustrated the SYNC FAILURE concept. The DECT standard presents an organised frame, so that the receiver, at the moment of receiving a useful signal from one radio channel, has to:

1. reconstruct first of all the phase timings (bit and slot) from the preamble field (16 + 16 bits),
2. and then demodulate the informative content (field A and field B).

Some of these operations may fail, because of the different factors influencing the propagation such as link budget, selective fading, Doppler effect, etc.

In particular there is a key function for the detection of the transmitted signal (said "Burst") from a radio channel, which can be identified in the correlation operation. Every RFP (and, of course, every PP) is therefore provided with a correlation circuit based on criteria which can be manufactured dependant When the found out correlation value does not overcome these criterions then the received burst is declared lost (SYNC FAILURE).

According to the previous technique no other operation will be carried out on these lost bursts except the one of counting them as such (WER calculation, Word Error Rate), taking for granted in general, that the content cannot be recovered and that the selected antenna by which they have been received, was the worst one.

Applying instead the innovative method the present invention is based on, that is executing some measurements on the received bursts having caused the sync failure, it turns out to be possible to achieve the following advantages:

- the measures are not destructive for the useful signal as they are carried out on unusable slots;
- it is possible to carry out in a very short time the measures related to the different antennas so that the selection of the most suitable antenna can be done in due time;
- measures carried out in the lost slots are more significant because they take place together with a criticality in progress that has to be improved and resolved.

## Brief description of the drawings

The invention will now be described in a more detailed way with reference to a preferred but not limiting embodiment illustrated with reference to the enclosed drawings, in which:

Fig. 1, already described, shows the network architecture of a DECT system;
Fig. 2, already described, shows the frame structure of the illustrated DECT system;
Fig. 3, already described, shows the multiframe structure of the DECT system;
Fig. 4 shows a flow chart of the antenna selection method according to the invention.

The method according to the invention foresees that in the case of missed correlation all available antennas will be scanned sequentially carrying out a certain number K of cycles.

The number K of cycles depends on the minimum duration of the measurement on each single antenna, on the minimum antenna switching time and on the number of available antennas according to the following relation:

$$K = (420 * 868000 - X - Y) / (N*Ta+(N-1)*TC)$$

where:

"420" is the number of bits in a time slot
"868000" is the bit time duration [$\mu$S]
"K" is the number of measurement cycles on the slot
"N" is the number of antennas
"Ta" is the measurement time [$\mu$S] on the single antenna

"Tc" is the switching time [μS] among the antennas

"X" is the inferior limit [μS] of the correlation time window

"Y" is the superior limit [μS] of the correlation time window

During said scanning period the RSSI values from the different antennas are measured, and therefore for each slot a table of the following type is collected:

CYCLE 1

ANT 1      RSSI= [ ] dBm

ANT 2      RSSI= [ ] dBm

..............

ANT N      RSSI= [ ] dBm]

Ta = [ ] μs

Tc = [ ] μs

CYCLE 2

ANT 1      RSSI= [ ] dBm

ANT 2      RSSI= [ ] dBm

..............

ANT N      RSSI= [ ] dBm

Ta = [ ] μs

Tc = [ ] μs

...............................................

CYCLE K

ANT 1      RSSI= [ ] dBm

ANT 2      RSSI= [ ] dBm

..............

ANT N      RSSI= [ ] dBm

Ta = [ ] μs

Tc = [ ] μs

Referring to Fig. 4, the method foresees the following steps:

Step 1: verify if the power variability of each antenna in the period of one slot is comprised in a preset range, for example ±3 dBm.

Step 2: in the affirmative case, that is in stationary slot conditions, step 2 is started off to check if the power variability among the different antennas is comprised in a predetermined range, for example ±3 dBm.

In the negative case, according to the type of antenna(s), which has caused such result, the choice is carried out (antenna(s) selection). More precisely, it will be selected that antenna which turns out to be the best regarding the detected RSSI (i.e. which shows the major and stable RSSI value).

Step 3: In the affirmative case, always at step 2, at step 3 a counter J(J=J+1) is increased, and at

Step 4: it will be stated, if the J counter value is superior to a fixed threshold (J>Thre.?); in the negative case the table will be reconsidered, while in the positive case at

Step 5: the table of the channels will be updated, and at

Step 6: the bearer handover will be required as the diversity does not turn out to be efficient.

If the answer to step 1 is negative, that is if the power variability of each antenna during the period of a slot is high, then at

Step 7: a counter I will be increased (I=I+1), and at

Step 8: it will be checked, if the I counter value overcomes a preset threshold (I>Tresh.?): in the negative case the table will be considered again, while in the positive case at

Step 9: the mode handover will be required to the PP, as this means that the portable set is moving with an appreciable speed compared to the dimensions of the cell and therefore defining frequent handover creates problems to the serving system. For this reason if the PP is of the dual band type, that is able either to operate according to the GSM and the DECT standard, then the PP will be forced to hand-over towards the GSM system, its speed being reasonably compatible with the operating modalities of such a system and incompatible with the operating modalities of the DECT system.

The measures correlated to the innovative method according to the present invention supply therefore the following additional information:

1) SWITCH OR INSTANT DIVERSITY

1) confirmation of the hypothesis that the used antenna is the worst (the hypothesis is based on the fact that the burst has not been received correctly).
2) Efficiency of the antenna diversity. In the case the measurements carried out on different antennas are comparable, that is contained in a range of + / - 3 dB) and still the transmitted burst is not correctly detected (i.e. it has been lost) it is preferable not to insist on the use of the diversity, but it is preferable to suggest the PP to carry out a handover.
3) The event with similar measurements could be stored as a statistic counter to value the entity of the improvement introduced by the antenna diversity.

A further advantage of this improvement consists in the fact that the extracted information is much more significant and efficient the more critical the situation of the channel and therefore the number of lost bursts are.

However nothing prohibits, in the case of finding possible anomalies, to extend these measurements outside of the lost bursts, sacrificing some correctly detected bursts or using other techniques to save the situation.

2) SELECTION IN A SECTORIAL ARRAY

During a slot it is possible to value the power received from all antennas of the array, selecting the one with the major received power.

The advantages in this case are the following:

1. the measurements are carried out in a very short time and therefore they provide homogeneous information;
2. time consuming researches by attempt are avoided on antennas which reception turns out to be of bad quality;
3. estimation of the mobile speed.

Regarding the estimation of the speed, this can happen according to two modalities. When the duration of the slot is comparable to the duration of the fading phenomenon, the slot fading conditions can be considered as stationary for the mobile speed below 10-15 [KM] / h.

But when the duration of the slot is too short compared to the fading phenomenon, the measurement is used as a trigger for other measurements.

Although a particular embodiment of the present invention has been described, it should be understood that the present invention is not limited thereto since other embodiments may be made by those skilled in the art without departing from the scope thereof. It is thus contemplated that the present invention encompasses any and all such embodiments covered by the following claims.

**Claims**

1.  Method for the antenna selection in the fixed radio station (RFP) of a digital telecommunication system of the TDMA type, in which the signals are arranged in frames with a preset duration, and in each frame a predetermined number of time slots are assigned, said system including a plurality of radiomobile units (PP), and said fixed radio station (RFP), which at its turn includes correlation means, i.e. means adapted to perform the correlation operation at the moment of receiving of each time slot of the frame of said digital signal and means adapted to select one antenna, or a plurality of antennas, connected to them, and in particular:

    •   N antennas, with N≥1, for the management in space diversity and/or polarisation of the received signal, and/or
    •   an array of sectorial antennas, and/or
    •   an array of phased antennas,

    **characterised in that** it comprises the following operational steps:

    a) verifying if the correlation operation carried out by said correlation means has been successful or not;
    b) in the case of failed correlation, sequential scanning within the same time slot of all available antennas and repeatedly measuring the received field strength or RSSI for a predetermined number K of measuring cycles;
    c) compiling a table containing for each antenna K measured RSSI values;
    d) verifying if the power variability of each antenna during the period of a time slot is included in a first preset range;
    e) in the affirmative case, verifying if the power variability between the different antennas stays in a second preset range comparing the data contained in the above-mentioned table;
    f) if the verification according to the previous step e) has a negative result, starting the selection of the antenna/s applying a criterion which takes into consideration the result of the comparison according to the previous step e).

2.  Method according to claim 1, **characterised in that** said fixed radio station (RFP] includes at least a pair of space diversity antennas and **in that** the criterion according to step f) consists in the choice of the antenna which received field strength value turns out to be the highest one among all measured ones.

3.  Method according to claim 1, **characterised in that** said fixed radio station (RFP) includes at least an array of sectorial antennas, and **in that** the criterion according to step f) consists in the choice of the antenna, which received field strength value turns out to be the highest one among all measured ones.

**4.** Method according to claim 1, **characterised in that**, if said verification phase according to step d) does not have an affirmative result, it comprises a further step to verify if such value overcomes a first preset threshold, and if not the cycle of operations will be repeated starting from the above-mentioned step b).

**5.** Method according to claim 4, **characterised in that**, if the radiomobile unit is of the dual mode type and if said further checking step to verify if said value is higher than said first preset threshold has a positive result, also the operational modality change request of the radiomobile unit will be started off (mode handover).

**6.** Method according to claim 1, **characterised by** fact that, if said verification phase according to step e) points out an overcoming of said second preset range, a further step is foreseen to verify if the power difference among the different antennas overcomes a second preset threshold, and in the negative case, the cycle of operations will be repeated starting from the above-mentioned step b).

**7.** Method according to claim 6, **characterised in that**, if said further step to verify if the difference of power among the different antennas overcomes a second preset threshold has a positive result, then also the request to change the bearer in use will be started off (bearer handover).

**8.** Method according to claim 1, **characterised in that** said number K of measuring cycles is calculated according to the following formula:

$$K = (420 * 868000 - X - Y) / (N*Ta+(N-1)*TC)$$

where:

- "420" is the number of bits in a time slot;
- "868000" is the bit time duration [$\mu$S];
- "N" is the number of antennas;
- "Ta" is the measurement time [$\mu$S] on the single antenna;
- "Tc" is the switching time [$\mu$S] among the antennas;
- "X" is the inferior limit [$\mu$S] of the correlation time window;
- "Y" is the superior limit [$\mu$S] of the correlation time window.

**9.** Method according to the previous claims, **characterised in that** said first and second preset ranges are equal to $\pm$ 3 dBm.

**10.** Device for the antenna selection in the fixed radio station (RFP) of a digital telecommunication system of the TDMA type, in which the signals are arranged in frames with a predetermined duration, and in each frame a predetermined number of time slots will be assigned, said system including a plurality of radiomobile units (PP) and said fixed station (RFP) which at its turn includes means adapted to carry out the correlation operation at the moment of receiving each time slot of the frame of said digital signal and means for the selection of one antenna or of a plurality of antennas to which are connected:

- N antennas for the management in space diversity and/or polarisation of the received signal, and/or
- an array of sectorial antennas, and/or
- a phased array of antennas,

**characterised in that** it comprises means adapted for performing the steps of method of claim 1.

**Patentansprüche**

**1.** Ein Verfahren zur Auswahl einer Antenne in der Basisstation (RFP) eines digitalen Telekommunikationssystems des Typs TDMA, bei dem Signale in Form von Rahmen einer vorgegebenen Dauer gegliedert werden und jedem dieser Rahmen eine bestimmte Anzahl Timeslots zugeordnet wird, wobei besagtes System eine Anzahl von Mobilfunkeinheiten (PP) sowie besagte Basisstation (RFP) umfasst. Letztere wiederum beinhaltet Korrelationsmittel, d. h. geeignete Mittel für die Durchführung der Korrelationsoperation zum Zeitpunkt des Empfangs jedes einzelnen Timeslots in dem Rahmen des besagten digitalen Signals, sowie ein Mittel zur Auswahl einer oder mehrerer Antenne(n), an das im einzelnen angeschlossen sind:

- $N$ Antennen, mit $N \geq 1$ für die Herstellung von Raumdiversity und/oder Polarisation des Empfangssignals, und/oder
- Eine Gruppe von Sektorantennen, und/oder
- Eine Gruppe von phasengesteuerten Antennen,

**dadurch gekennzeichnet, dass** es folgende Einzelschritte umfasst:

a) Überprüfung, ob die von besagtem Korrelationsmittel ausgeführte Korrelationsoperation erfolgreich war oder nicht;
b) im Falle einer fehlgeschlagenen Korrelation, innerhalb desselben Timeslots sequenzielles Scannen aller verfügbaren Antennen und wiederholte Messung der Empfangsfeldstärke bzw. des RSSI für eine vordefinierte Anzahl von K Messzyklen;

c) Kompilierung einer Tabelle, die die zu jeder Antenne *K* gemessenen RSSI-Werte enthält;

d) Überprüfung, ob die Leistungsdifferenz jeder Antenne während der Dauer eines Slots in einem voreingestellten ersten Toleranzbereich bleibt;

e) im positiven Fall, Überprüfung, ob die Leistungsdifferenz zwischen den verschiedenen Antennen bezogen auf die Daten der oben genannten Tabelle in einem voreingestellten zweiten Toleranzbereich bleibt;

f) falls die Überprüfung im vorstehenden Schritt e) zu einem negativen Ergebnis führt, Veranlassen der Antennenauswahl gemäß einem Kriterium, das das Ergebnis des Vergleichs gemäß Schritt e) oben berücksichtigt.

2. Ein Verfahren gemäß Anspruch 1, **dadurch gekennzeichnet, dass** besagte Basisstation (RFP) mindestens ein Paar Antennen mit Raumdiversity beinhaltet, sowie dadurch, dass das Kriterium gemäß Schritt f) oben die Auswahl derjenigen Antenne beinhaltet, die unter allen gemessenen Antennen die höchste Empfangsfeldstärke aufweist.

3. Ein Verfahren gemäß Anspruch 1, **dadurch gekennzeichnet, dass** besagte Basisstation (RFP) mindestens eine Gruppe von Sektorantennen beinhaltet, sowie dadurch, dass das Kriterium gemäß Schritt f) oben die Auswahl derjenigen Antenne beinhaltet, die unter allen gemessenen Antennen die höchste Empfangsfeldstärke aufweist.

4. Ein Verfahren gemäß Anspruch 1, **dadurch gekennzeichnet, dass**, wenn besagte Überprüfung gemäß Schritt d) nicht zu einem positiven Ergebnis führt, ein weiterer Schritt vorgesehen ist, in dem überprüft wird, ob der betreffende Wert außerhalb eines ersten voreingestellten Toleranzbereichs liegt, und, wenn dies nicht der Fall ist, der gesamte Zyklus ab Schritt b) oben wiederholt wird.

5. Ein Verfahren gemäß Anspruch 4, **dadurch gekennzeichnet, dass**, wenn eine Dual-Mode-Mobilfunkeinheit eingesetzt wird und wenn besagter weiterer Schritt zur Überprüfung, ob der besagte Wert außerhalb eines voreingestellten ersten Toleranzbereichs liegt, ein positives Ergebnis liefert, auch eine Aufforderung an das Mobilteil ergeht, die Betriebsart zu wechseln (Mode-Handover).

6. Ein Verfahren gemäß Anspruch 1, **dadurch gekennzeichnet, dass**, wenn besagte Überprüfung gemäß Schritt e) oben eine Nichteinhaltung des besagten voreingestellten zweiten Toleranzbereichs ergibt, ein weiterer Schritt vorgesehen ist, in dem überprüft wird, ob die Leistungsdifferenz zwischen den verschiedenen Antennen einen voreingestellten zweiten Toleranzbereich übersteigt, und, wenn dies nicht der Fall ist, der gesamte Zyklus ab Schritt b) oben wiederholt wird.

7. Ein Verfahren gemäß Anspruch 6, **dadurch gekennzeichnet, dass**, wenn besagter weiterer Schritt zur Überprüfung, ob die Leistungsdifferenz zwischen den verschiedenen Antennen einen voreingestellten zweiten Toleranzbereich übersteigt, ein positives Ergebnis liefert, eine Aufforderung ergeht, den Träger zu wechseln (Bearer-Handover).

8. Ein Verfahren gemäß Anspruch 1, **dadurch gekennzeichnet, dass** besagte Anzahl von *K* Messzyklen nach folgender Formel berechnet wird:

$$K = (420 * 868000 - X - Y) / (N*Ta + (N-1)*TC)$$

worin:

- "420" die Anzahl der Bits in einem Timeslot ist
- "868000" die Dauer eines Bit [in $\mu$S] ist
- "N" die Anzahl der Antennen ist
- "Ta" die Messdauer [in $\mu$S] an der einzelnen Antenne ist
- "Tc" die Umschaltzeit [in $\mu$S] zwischen den Antennen ist
- "X" der untere Grenzwert [in $\mu$S] des Korrelations-Zeitfensters ist
- "Y" der obere Grenzwert [in $\mu$S] des Korrelations-Zeitfensters ist

9. Ein Verfahren gemäß den vorstehenden Ansprüchen, **dadurch gekennzeichnet, dass** besagter erster und besagter zweiter Toleranzbereich $\pm$ 3 dBm entsprechen.

10. Ein Gerät für die Antennenauswahl in der Basisstation (RFP) eines digitalen Telekommunikationssystems des Typs TDMA, bei dem Signale in Form von Rahmen einer vorgegebenen Dauer gegliedert werden und jedem dieser Rahmen eine bestimmte Anzahl Timeslots zugeordnet wird, wobei besagtes System eine Anzahl von Mobilfunkeinheiten (PP) sowie besagte Basisstation (RFP) umfasst. Letztere wiederum beinhaltet Korrelationsmittel, d. h. geeignete Mittel für die Durchführung der Korrelationsoperation zum Zeitpunkt des Empfangs jedes einzelnen Timeslots in dem Rahmen des besagten digitalen Signals, sowie ein Mittel zur Auswahl einer oder mehrerer Antenne(n), an das im einzelnen angeschlossen sind:

- *N* Antennen, mit *N* $\geq$ 1) für die Herstellung von Raumdiversity und/oder Polarisation des Empfangssignals, und/oder

- Eine Gruppe von Sektorantennen, und/oder
- Eine Gruppe von phasengesteuerten Antennen,

**dadurch gekennzeichnet, dass** es Mittel zur Durchführung der einzelnen Schritte des in Anspruch 1 beschriebenen Verfahrens beinhaltet.

## Revendications

1. Procédé de sélection d'antenne dans la station radio fixe (RFP) d'un système de télécommunication numérique du type AMRT, dans lequel les signaux sont organisés en trames d'une durée prédéfinie et un nombre prédéterminé d'intervalles de temps est alloué à chaque trame,
   ledit système comprenant une pluralité de postes radiotéléphoniques mobiles (PP) et ladite station radio fixe (RFP), laquelle comprend pour sa part des moyens de corrélation, c'est-à-dire des moyens adaptés pour exécuter l'opération de corrélation au moment de la réception de chaque intervalle de temps de la trame dudit signal numérique et des moyens adaptés pour sélectionner l'antenne ou une pluralité d'antennes, reliées entre elles, et en particulier :

   - N antennes, avec N ≥ 1, pour assurer la gestion en diversité d'espace etou en polarisation du signal reçu, et/ou
   - un réseau d'antennes sectorielles, et/ou
   - un réseau d'antennes à commande de phase,

   caractérisé en ce qu'il comprend les étapes opérationnelles suivantes :

   a) vérifier si l'opération de corrélation exécutée par lesdits moyens de corrélation a réussi ou non ;
   b) dans le cas d'un échec de la corrélation, analyse séquentielle à l'intérieur du même intervalle de temps de toutes les antennes disponibles et mesure répétée de l'intensité de champ reçue ou RSSI pour un nombre prédéterminé K de cycles de mesure ;
   c) compiler une table contenant pour chaque antenne K valeurs de RSSI mesurées ;
   d) vérifier si la variabilité de la puissance de chaque antenne durant la période d'un intervalle de temps est comprise dans une première plage prédéfinie ;
   e) dans l'affirmative, vérifier si la variabilité de puissance entre les différentes antennes reste dans une seconde plage prédéfinie en comparant les données contenues dans la table précitée ;
   f) si la vérification selon l'étape précédente e) livre un résultat négatif, entamer la sélection de la ou des antennes en appliquant un critère qui prend en considération le résultat de la comparaison selon l'étape précédente e).

2. Procédé selon la revendication 1, **caractérisé en ce que** ladite station radio fixe (RFP) comprend au moins une paire d'antennes en diversité d'espace et **en ce que** le critère selon l'étape f) consiste à choisir l'antenne dont la valeur de l'intensité de champ reçue s'avère être la plus élevée parmi toutes celles mesurées.

3. Procédé selon la revendication 1, **caractérisé en ce que** ladite station radio fixe (RFP) comprend au moins un réseau d'antennes sectorielles et **en ce que** le critère selon l'étape f) consiste à choisir l'antenne dont la valeur de l'intensité de champ reçue s'avère être la plus élevée parmi toutes celles mesurées.

4. Procédé selon la revendication 1, **caractérisé en ce que**, si ladite phase de vérification selon l'étape d) ne donne pas un résultat positif, il comprend une étape supplémentaire pour vérifier si une telle valeur dépasse un premier seuil prédéfini, et si non, le cycle des opérations sera répété en commençant à partir de l'étape b) susmentionnée.

5. Procédé selon la revendication 4, **caractérisé en ce que**, si le poste radiotéléphonique mobile est du type à double bande et si ladite étape de contrôle supplémentaire pour vérifier si ladite valeur est supérieure audit premier seuil prédéfini, livre un résultat positif, la requête de changement du mode d'exploitation du poste radiotéléphonique mobile sera également lancée (transfert de mode).

6. Procédé selon la revendication 1, **caractérisé par le fait que**, si ladite phase de vérification selon l'étape e) révèle un dépassement de ladite seconde plage prédéfinie, une étape supplémentaire est prévue pour vérifier si la différence de puissance entre les différentes antennes dépasse un second seuil prédéfini et, dans la négative, le cycle des opérations sera répété en commençant à partir de l'étape b) susmentionnée.

7. Procédé selon la revendication 6, **caractérisé en ce que**, si ladite étape supplémentaire pour vérifier si la différence de puissance entre les différentes antennes dépasse un second seuil prédéfini a un résultat positif, la requête de changement de la porteuse utilisée sera également lancée (transfert de porteuse).

8. Procédé selon la revendication 1, **caractérisé en ce que** ledit nombre K de cycles de mesure est calculé selon la formule suivante :

$$K = (420 * 868\ 000 - X - Y) / (N*Ta+(N-1)*TC)$$

où :

- « 420 » est le nombre de bits d'un intervalle de temps ;
- « 868 000 » est la durée du temps de bit [μs] ;
- « N » est le nombre d'antennes ;
- « Ta » est le temps de mesure [μs] par antenne ;
- « Tc » est le temps de commutation [μs] entres antennes ;
- « X » est la limite inférieure [μs] de la fenêtre temporelle de corrélation ;
- « Y » est la limite supérieure [μs] de la fenêtre temporelle de corrélation.

9. Procédé selon les revendications précédentes, **caractérisé en ce que** lesdites première et seconde plages prédéfinies sont égales à ± 3 dBm.

10. Dispositif de sélection d'antenne dans la station radio fixe (RFP) d'un système de télécommunication numérique du type AMRT, dans lequel les signaux sont organisés en trames d'une durée prédéterminée et un nombre prédéterminé d'intervalles de temps est alloué à chaque trame, ledit système comprenant une pluralité de postes radiotéléphoniques mobiles (PP) et ladite station fixe (RFP), laquelle comprend pour sa part des moyens adaptés pour exécuter l'opération de corrélation au moment de la réception de chaque intervalle de temps de la trame dudit signal numérique et des moyens pour sélectionner une antenne ou une pluralité d'antennes auxquels sont connectés :

- N antennes pour assurer la gestion en diversité d'espace et/ou en polarisation du signal reçu, et/ou
- un réseau d'antennes sectorielles, et/ou
- un réseau d'antennes à commande de phase,

**caractérisé en ce qu'**il comprend des moyens adaptés pour exécuter les étapes du procédé de la revendication 1.

**Fig. 1**

Fig. 2

Fig. 3

Sync Failure Measures

refresh to the next sync failure

step 9 — mode hand.

step 7 — I=I+1

step 8 — I > Thre. ?

YES / NO

step 1

NO / YES

I=0

step 6 — bearer hand.

step 5

YES

step 3 — J=J+1

step 4 — J > Thre. ?

step 2

YES / NO

J=0

Antenna(s) selection

Fig. 4